# EUROPEAN PATENT APPLICATION

(11) **EP 3 392 817 A1**
(43) Date of publication of application: **24.10.2018**
(21) Application number: 16875627.8
(22) Date of filing: 13.12.2016
(51) Int. Cl.: G06Q 30/02, G06F 13/00, G06F 17/30

(54) **SALES ASSISTANCE SYSTEM, CONTROL METHOD THEREFOR, AND SALES ASSISTANCE COMPUTER PROGRAM**

(30) Priority: 14.12.2015 JP 2015243411
(71) Applicant: Recruit Holdings Co., Ltd., Tokyo 104-0061 (JP)
(72) Inventor: IHARA, Shingo, Tokyo 100-6640 (JP)
(74) Representative: EIP
(86) International application number: PCT/JP2016/087028
(87) International publication number: WO 2017/104650

(57) **Abstract**

In order to perform appropriate and meticulous follow up for each customer, in accordance with the use mode of a customer device by the customer, a sales assistance system according to the disclosure of the present invention is provided with: an information collection unit that collects information about an operation history of a customer device by a customer for a prescribed time period starting from when the customer starts using the customer device via a network; a cluster analysis unit that analyzes, on the basis of the operation history, the use mode of the customer device by the customer, and on the basis of the use mode, classifies the customer into a particular cluster from among a plurality of typified clusters; and a follow-up action determination unit that determines a follow-up action set for the particular cluster to be the follow-up action for the customer classified into the particular cluster.

## Description

### Cross-references to Related Applications

This application is based on Japanese Patent Application No. 2015-243411, filed on December 14, 2015, the contents of all of which are incorporated herein as a reference.

### Technical Field

The disclosure of the present invention relates to a sales assistance system, a control method therefor, and a sales assistance computer program.

### Background Art

The so-called "route business" (also referred to as "route sales") is one of sales forms for acquiring a new negotiation opportunity in addition to the retention of existing customers by visiting a business connection of the own company on a regular or non-regular basis or by utilizing communication by telephone, e-mail, or the like. Unlike new business development sales or individual project-based sales, this kind of route sales may be one of activities of performing follow-up, providing a support, or the like (hereinafter, these follow-up and support or the like will be simply referred to as "follow-up") for existing customers to increase the sales unit price per customer or business opportunities. As this kind of route sales, for example, Patent Document 1 describes a technique in which a sales representative makes the rounds of customers as targets to visit regularly (for example, several times at regular intervals over a month period or the like) and formally according to a manual or the like.

### Citation List

### Patent Document

Patent Document 1: Japanese Patent Application Laid-Open No. 2003-99092 (for example, paragraph 0024 and the like)

### Summary

### Technical Problem

Incidentally, when delivering or lending products, commodities, apparatuses, devices, systems, or the like (customer devices) that a customer uses in business or enterprise and performing follow-up related to the method of using or handling them, some customers may need little follow-up, while other customers may need frequent and careful follow-up to the contrary, depending on the frequency of use (usage) or a learning level of each customer. For example, customers may include heavy users who use devices as customer devices almost every business day and use the customer devices relatively frequently, while the customers may include users who use the devices at the time of introduction of the devices, while using the devices relatively less frequently, and eventually do not use the devices almost at all. Therefore, visiting customers for sales or contacting the customers, for example, regularly and formally at the same frequency without distinguishing between both may lead to a decrease in the sales efficiency, the sales effect, and the customer satisfaction level and consequently may cause customer churn. Conventionally, however, follow-up actions for customers fully in light of these circumferences have not been performed.

Therefore, the disclosure of the present invention has been performed in view of these circumstances. Therefore, it is an object of the present invention to provide a sales assistance system, a control method therefor, and a sales assistance computer program capable of performing an appropriate and meticulous follow up for each customer in accordance with the use mode (an overall concept including, for example, a frequency of use, a learning level of operation, a use tendency, and the like) of a customer device by a customer.

### Solution to Problem

The present inventor has completed the present invention, based upon the findings that there are a plurality of characteristic tendencies in changes over time in the number of operations of customer devices for a prescribed time period starting from when the customers start using the customer devices and it is possible to typify the use modes of the customer devices by the customers into a plurality of clusters (categories, groups, or the like) different from each other on the basis of the plurality of characteristic tendencies, as a result of analyzing the operation histories of the customer devices by the customers seriously and precisely.

Specifically, a sales assistance system according to one aspect of the disclosure of the present invention includes: an information collection unit that collects information about an operation history of a customer device by a customer for a prescribed time period starting from when the customer starts using the customer device; a cluster analysis unit that analyzes, on the basis of the operation history, the use mode of the customer device by the customer, and on the basis of the use mode, classifies the customer into a particular cluster from among a plurality of typified clusters; and a follow-up action determination unit that determines a follow-up action set for the particular cluster to be the follow-up action for the customer classified into the particular cluster. In this case, the sales assistance system according to one aspect of the disclosure of the present invention may include a memory resource that stores the plurality of clusters.

Furthermore, the sales assistance system may be configured so that the cluster analysis unit calculates the changes over time in the number of operations for the prescribed time period by the customer from the operation history and selects the particular cluster into which the customer is classified on the basis of the changes over time in the number of operations.

Further, the sales assistance system may be configured so that the cluster analysis unit calculates the changes over time in the number of operations for the prescribed time period for each type of the operations in the customer device.

Still further, the sales assistance system may be configured so that the follow-up action determination unit determines at least one of notifying a sales representative of a follow-up instruction to the customer, notifying the customer of the follow-up content directly or indirectly, and changing a screen display displayed on the customer device of the customer, in addition to the content of the follow-up action.

Moreover, a control method for a sales assistance system according to another aspect of the disclosure of the present invention is intended to effectively control the sales assistance system including the information collection unit, the cluster analysis unit, and the follow-up action determination unit according to the disclosure of the present invention. Specifically, in this method, the information collection unit collects information about an operation history of a customer device by a customer for a prescribed time period starting from when the customer starts using the customer device, the cluster analysis unit analyzes the use mode of the customer device by the customer on the basis of the operation history and classifies the customer into a particular cluster from among a plurality of typified clusters, and the follow-up action determination unit determines a follow-up action set for the particular cluster to be the follow-up action for the customer classified into the particular cluster.

Moreover, a customer sales assistance computer program according to still another aspect of the disclosure of the present invention causes a computer (not limited to a single computer nor a single type of computers, but a plurality of or a plurality types of computers are applicable: the same applies hereinafter) to function as: an information collection unit that collects information about an operation history of a customer device by a customer for a prescribed time period starting from when the customer starts using the customer device via a network; a cluster analysis unit that analyzes the use mode of the customer device by the customer on the basis of the operation history and classifies the customer into a particular cluster from among a plurality of typified clusters; and a follow-up action determination unit that determines a follow-up action set for the particular cluster to be the follow-up action for the customer classified into the particular cluster.

### Advantageous Effects of Invention

According to the disclosure of the present invention, a customer is classified into a particular cluster from the results of analyzing the use mode based on the operation history of a customer device by the customer and a follow-up action set for the particular cluster (in other words, a follow-up action specific to the cluster) is determined to be the follow-up action for the customer. This enables a follow-up action based on the actual use mode of the customer device by the customer to be selectively performed, thereby enabling an appropriate and meticulous follow-up to be performed for each customer. In addition, consequently it leads to an increase in the sales efficiency, the customer satisfaction level, and the sales effect, thereby enabling not only the retention of existing customers (the prevention of customer churn) but also an increase in the opportunity of acquiring a new transaction. Furthermore, the follow-up action is determined on the basis of the analysis results of the use mode of the customer, thereby increasing the processing speed, enabling memory saving and a decrease in the amount of communication data, and enabling an increase in the reliability of processing.

### Brief Description of Drawings

Fig. 1 is a system block diagram schematically illustrating a preferred embodiment of a network configuration or the like related to a sales assistance system according to the disclosure of the present invention.
Fig. 2 is a system block diagram schematically illustrating an example of a configuration of a server device in the sales assistance system according to the disclosure of the present invention.
Fig. 3 is a system block diagram schematically illustrating an example of a configuration of a customer device (register device) in the sales assistance system according to the disclosure of the present invention.
Fig. 4 is a system block diagram schematically illustrating an example of a configuration of a user device (user terminal) in the sales assistance system according to the disclosure of the present invention.
Fig. 5 is a bar graph illustrating a plurality of clusters A to F according to use modes extracted from test data related to operation histories of register devices 20 and the number of stores (the number of accounts) of customers S belonging thereto.
Fig. 6A is a line graph illustrating the average values of the number of operations of the register devices 20 for each operation category and with time, with respect to the clusters A to C.
Fig. 6B is a line graph illustrating the average values of the number of operations of the register devices 20 for each operation category and with time, with respect to the clusters D to F.
Fig. 7 is a flowchart illustrating an example of a (partial) flow of processing in the sales assistance system according to the disclosure of the present invention.
Fig. 8 is a plan view illustrating an example of a changed setting screen displayed on a display device 26 of the register device 20 used by a customer S belonging to a particular cluster.

### Description of Embodiments

Hereinafter, detailed description will be made on preferred embodiments of the present invention. It should be understood that the following preferred embodiments are intended for purposes of illustration only of the present invention and are not intended to limit the scope of the present invention only to the preferred embodiments. In addition, various modifications can be made on the present invention without departing from the scope and principles of the present invention. Furthermore, a person skilled in the art is able to adopt embodiments in which elements described below are replaced with equivalent ones and these embodiments are also included in the scope of the present invention. Still further, it is to be understood that the vertical, horizontal, or other positional relationship is based on the illustration of the drawings unless otherwise specified. Furthermore, the various dimensional ratios in the drawings are not limited to the illustrated ratios.

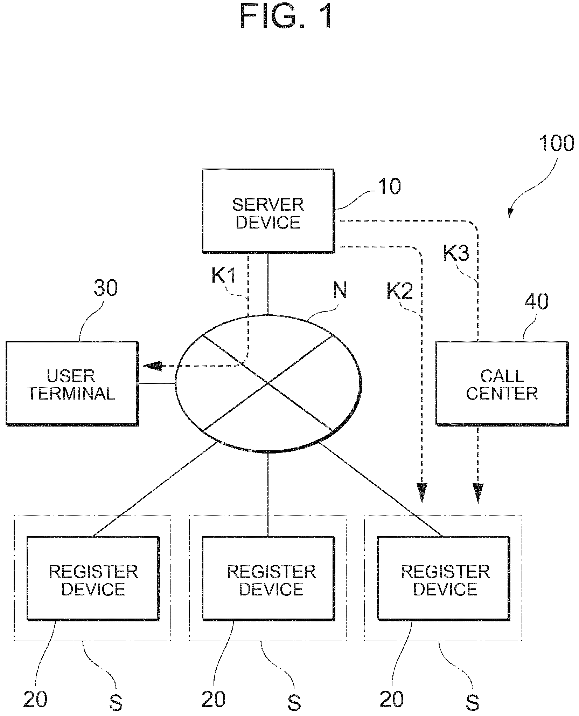

Fig. 1 is a system block diagram schematically illustrating a preferred embodiment of a network configuration or the like related to a sales assistance system according to the disclosure of the present invention. A sales assistance system 100 includes one or more register devices 20 (customer devices) deployed in each of a plurality of customers S and a server device 10 connected to the register devices 20 via a network N.

The server device 10, which is a network node having some of the functions of the sales assistance system 100, is formed of, for example, a host computer having high computing power and expresses server functions by the running of a predetermined server program in the host computer.

In this embodiment, the server device 10 stores information (login, logout, various settings, error notification, accounting processing, etc.) about operation histories by a person in charge of the register transmitted from the register devices 20 deployed in the plurality of customers S, analyzes at an appropriate time the states of the operation of the register devices 20 on the basis of the information about the operations histories, determines at an appropriate time whether or not immediate follow-up for a customer S on the basis of a result of the analysis, and calculates at an appropriate time the degree of confusion of the person in charge of the register in the operation of the register device 20 if necessary. In addition, if necessary, the server device 10 notifies a user terminal 30 (information terminal device) possessed by a sales representative of an instruction evoking follow-up for the customer S via a network N or notifies the customer S of the content of the follow-up (a tutorial of various operation methods of the register device 20, etc.) directly by using an e-mail, an electronic message, or the like or indirectly via a telephone or the like from a call center 40 or the like.

Moreover, the network N is a communication network configured of a mixture of, for example, a wired network (a local area network [LAN], a wide area network [WAN], a value-added network [VAN], or the like) and a wireless network (a mobile communication network, a satellite communication network, Bluetooth®, Wireless Fidelity [Wi-Fi], High Speed Downlink Packet Access [HSDPA], or the like).

On one hand, the register device 20 is a machine (including a device, an instrument, a terminal, and a system) having a register function and is not particularly limited in its form. As a more specific example, the register device 20 may be a POS register (including not only a register into which a POS function is integrated, but also a register system provided with a device having the POS function and a register device, and the like), a device into which application software for implementing the POS function is installed, a device which executes application software for implementing the POS function stored in the cloud or executes a system having the POS function provided on the Web, and the like. As another specific example, a portable information terminal device, which is assumed as the register device 20 in the present embodiment, is a tablet-type terminal (including a mobile phone typified by a smartphone) using a user interface such as a touch panel and a high-visibility display and having a communication function with the network N (it can be said that the tablet-type terminal is one of network nodes, in this regard), into which POS application software is installed.

On the other hand, the user terminal 30 is one of network nodes for receiving the notification transmitted from the server device 10 as described above and is configured of a general-purpose communication terminal device used by a sales representative, for example, which is a user. More specifically, the user terminal 30 is also a tablet-type terminal in the same manner as the register device 20, and application software for viewing the notification received from the server device 10, POS application software which is the same as that of the register device 20, if needed, tutorial software for register operations, or the like may be installed in the user terminal 30.

Furthermore, while the call center 40 itself is not a constituent essential to the sales assistance system 100 of the present embodiment, the call center 40 is useful when making a phone call or the like to a customer S to perform follow-up as described above. The call center 40 has operators or other human resources who tell the customer the content of the follow-up by phone.

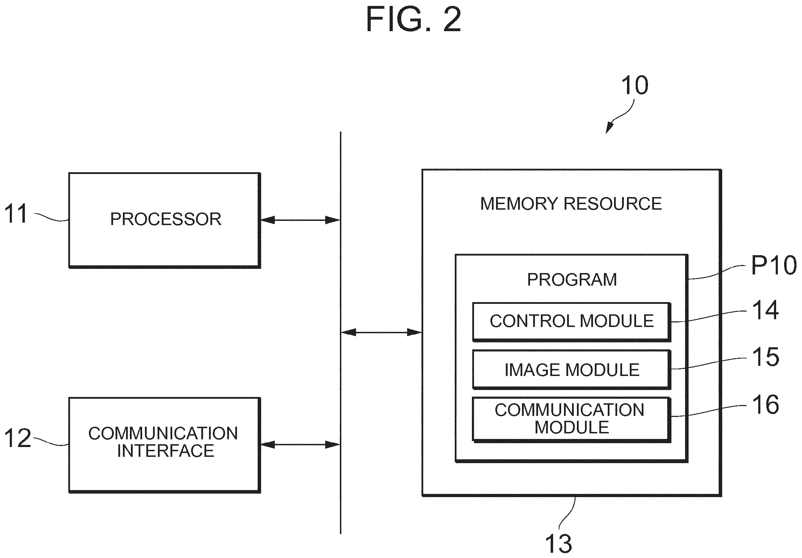

Fig. 2 is a system block diagram schematically illustrating an example of the configuration of the server device 10. As illustrated in Fig. 2, the server device 10 includes a processor 11, a communication interface 12, and a memory resource 13.

The processor 11, which includes an arithmetic logic unit for processing arithmetic, logical, and bit operations or the like and various registers (a program counter, a data register, an instruction register, a general-purpose register, and the like; different from the register device 20), interprets and executes a program P10 stored in the memory resource 13 and outputs a predetermined arithmetic processing result.

The communication interface 12 is a hardware module for use in connecting to the register device 20 and/or to the user terminal 30 via the network N and is a modulator-demodulator such as, for example, an ISDN modem, an ADSL modem, a cable modem, an optical modem, a soft modem, or the like.

The memory resource 13 is, for example, a logical device provided by a storage area of a physical device (a computer-readable recording medium or the like such as a disk drive or a semiconductor memory). In this case, a plurality of physical devices may be mapped into one logical device or one physical device may be mapped into a plurality of logical devices. Furthermore, this memory resource 13 may store logs or the like related to information transmission histories from respective register devices 20 or access histories of the user terminal 30.

The program P10 is a program for use in performing a series of information processes (classification, processing, analysis, etc. of information) with the use of information about operation histories transmitted from the plurality of register devices 20 and includes a plurality of software modules appropriately called and executed during the operation of the main program (the aforementioned server program or the like) of the server device 10. These software modules are sub-programs modularized to perform respective specific processes and created by using, for example, a procedure, a sub-routine, a method, a function, a data structure, or the like. The term "module" means a unit compilable only in that part (though not limited thereto).

More specifically, the program P10 includes a control module 14 which performs various kinds of control arithmetic processing with respect to the information acquired from the register devices 20, modules which generate, display, or reproduce a text, an image, audio data, or the like notified to the user terminals 30, the call center 40, the customers S, or the like on the basis of a result of processing performed by the control module 14 (hereinafter, the modules will be collectively referred to as "image module 15"), and a communication module 16 which performs communication processing or the like with the network N through the communication interface 12. Incidentally, the memory resource 13 may store operation parameters such as parameters required for the control module 14 to perform various kinds of control arithmetic processing and parameters required for the image module 15 to perform the generation of various data or the display/reproduction processing thereof.

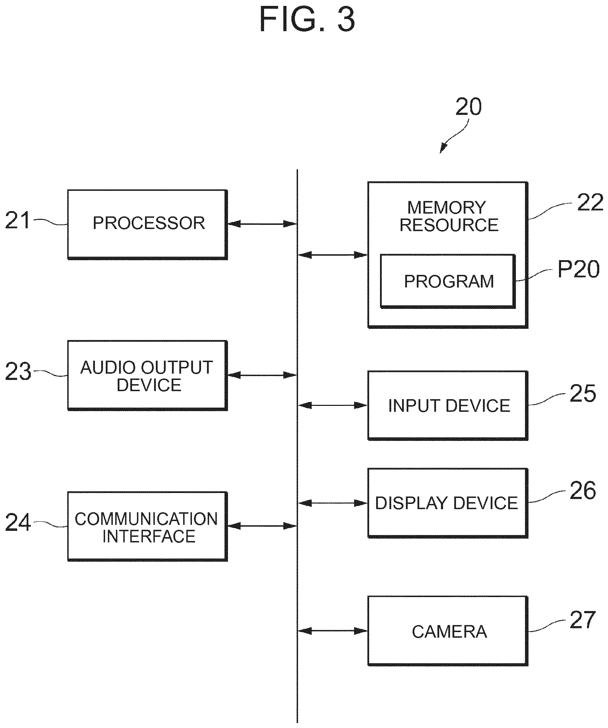

Fig. 3 is a system block diagram schematically illustrating an example of the configuration of the register device 20. As described above, the register device 20 in the present embodiment is a portable information terminal device, in which the POS application software is installed in the tablet-type terminal, having a processor 21, a memory resource 22, an audio output device 23, a communication interface 24, an input device 25, a display device 26, and a camera 27.

The processor 21 includes an arithmetic logic unit and various registers (a program counter, a data register, an instruction register, a general-purpose register, and the like; different from the register device 20). In addition, the processor 21 interprets and executes the POS application software which is a program P20 stored in the memory resource 22, performs accounting processing or the like by the customer S according to the operation information input to the input device 25, and transmits information about all aspects of the operation history thereof to the server device 10 via the network N. Furthermore, the processor 21 causes the display device 26 to display text data or image data of the notification (an e-mail, an electronic message, or the like) transmitted to the dedicated account of the customer S from the server device 10 or reproduces the audio data on the audio output device 23.

In addition, the POS application software is able to be distributed via the network N from, for example, the server device 10; the POS application software may be installed into the register device 20 before the register device 20 is delivered or lent to the customer S or may be installed and updated by a manager, an employee, or the like of the customer S or automatically after the register device 20 is delivered or lent to the customer S.

The memory resource 22 is a logical device provided from the storage area of the physical device (for example, a computer-readable recording medium such as a disk drive or a semiconductor memory) and stores an operating system program, a driver program, various data or the like used for processing of the register device 20. As driver programs, for example, there are an input device driver program for controlling the input device 25, an output device driver program for controlling the audio output device 23 and the display device 26, and the like.

The audio output device 23 is, for example, a sound player capable of reproducing general sound data.

The communication interface 24 is used to provide a connection interface with the server device 10 and includes a wireless communication interface and/or a wired communication interface.

The input device 25 is used to provide an interface for accepting a register input operation and may be, for example, a touch panel, a keyboard, a mouse, an information code reader, or the like.

The display device 26 is used to provide an image display interface for a register operation, an image display interface for browsing information stored in the register device 20 to a manager of the customer S, an employee in charge of the register, or the like, and the display device 26 may be, for example, an organic EL display, a liquid crystal display, a CRT display, or the like.

The camera 27 is used to take a still image of an information code attached to a product or the like in accounting processing or a still image of the product itself or the like, for example.

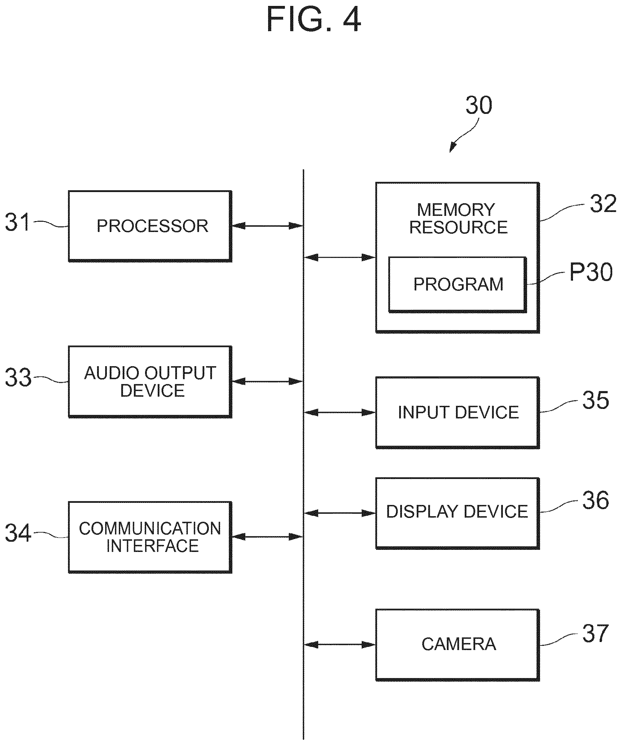

Fig. 4 is a system block diagram schematically illustrating an example of the configuration of the user terminal 30. As described above, in this embodiment, the user terminal 30 is a tablet-type terminal similar to the register device 20 and has a system configuration (physical configuration) equivalent to that of the register device 20. Specifically, the user terminal 30 includes a processor 31, a memory resource 32, an audio output device 33, a communication interface 34, an input device 35, a display device 36, and a camera 37.

The processor 31, which is configured in the same manner as the processor 21, receives a notification transmitted from the server device 10, interprets and executes application software, which is a program P30 stored in the memory resource 32, and causes the display device 36 to display various text data and image data or reproduces various audio data on the audio output device 23.

The memory resource 32, which is configured in the same manner as the memory resource 22, stores an operating system program, a driver program, various data and the like used for processing of the user terminal 30. As examples of the driver program, there are an input device driver program for controlling the input device 35, an output device driver program for controlling the audio output device 33 and the display device 36, and the like.

The audio output device 33 is a sound player capable of reproducing, for example, general sound data similarly to the audio output device 23.

The communication interface 34 is used to provide a connection interface with the server device 10, similarly to the communication interface 24, and is formed of a wireless communication interface or a wired communication interface.

The input device 35 is used to provide an interface for accepting an input operation for accessing information stored in the user terminal 30 and may be, for example, a touch panel, a keyboard, a mouse, or the like.

The display device 36 is used to provide an image display interface for browsing information stored in the user terminal 30 to a user (sales representative) and may be, for example, an organic EL display, a liquid crystal display, a CRT display, or the like. The camera 37 is, similarly to the camera 27, used to take a still image of, for example, an information code attached to a product or the like or the product itself or the like.

An example of a processing operation in the sales assistance system 100 configured as described above will be described below. As described above, according to the present inventor's findings, it has been confirmed that there are a plurality of characteristic tendencies in changes over time in the number of operations of the register device 20 for a prescribed time period starting from when the customer S starts using the register device 20 (customer device). Furthermore, the customer S is able to be classified into any one of the plurality of typified clusters (categories, groups, or the like) by comparing the characteristic tendencies with the actual use mode of the register device 20 by the customer S. In this specification, first, an example of the plurality of clusters typified as described above will be described for better understanding of the present invention.

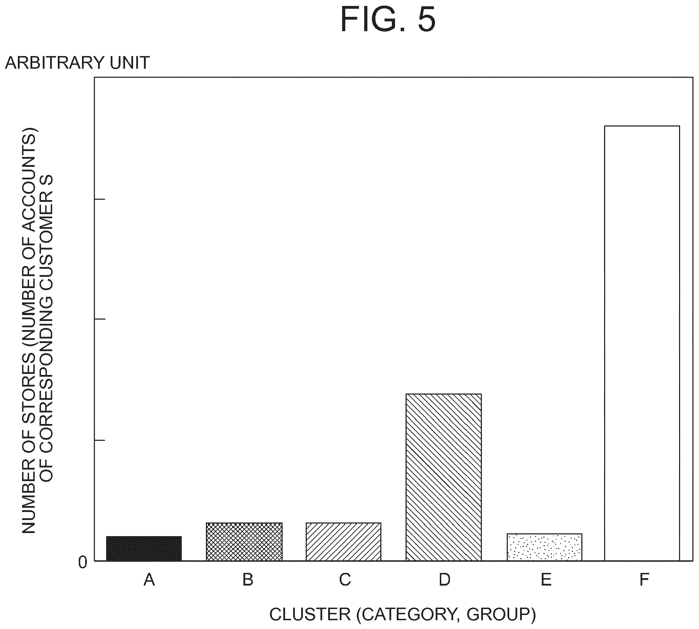

Fig. 5 is a bar graph illustrating a plurality of clusters A to F, which have been extracted on the basis of a result of analyzing changes over time with respect to the number of various operations in the register devices 20 by using test data related to the operation histories of the register devices 20 by a large number of customers S, and the number of stores (the number of accounts) of the customers S determined to belong to each of the clusters. The target stores (accounts) are assumed to be stores in which several months or more (a prescribed time period) have been elapsed since the start (introduction) of using the register device 20. The total number of target stores has reached into the tens of thousands.

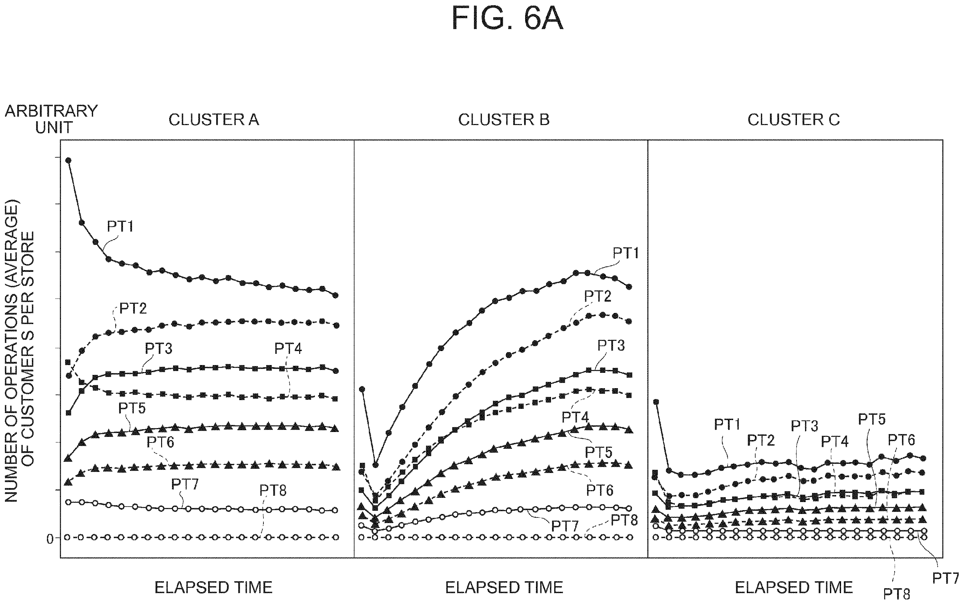

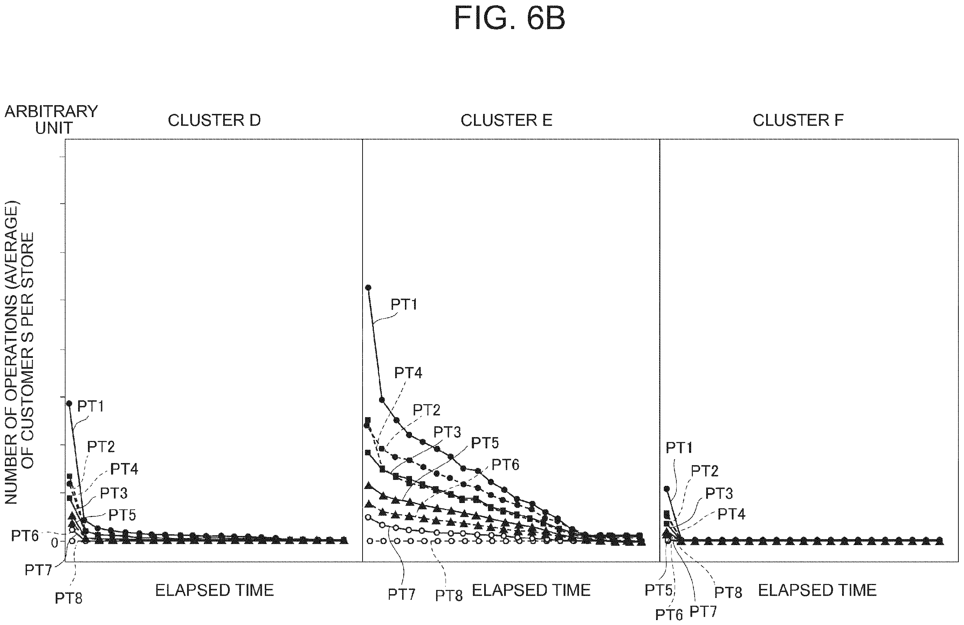

Subsequently, the changes over time in the operation histories of the customers S in the clusters A to F will be described with reference to Figs. 6A and 6B. Figs. 6A and 6B are line graphs illustrating the average value of the number of operations of the register devices 20 for each type of operation (operation category) and with time, with respect to each of the clusters A to C and the clusters D to F illustrated in Fig. 5, respectively. The plots PT1 to PT8 in Figs. 6A and 6B indicate operation categories different from each other. As the operation categories, there are, for example, initialization, other various settings, reservation management, accounting management, sales management, customer management, login/logout, and the like.

### <Characteristics of clusters A to F>

### [Cluster A]

As can be seen from Fig. 6A, the customers S belonging to the cluster A tend to perform a wide variety of operations (operations of almost all plots) relatively frequently from an extremely early period of starting the use of the register devices 20. Furthermore, regarding the operations of plots PT1 and PT4, the number of operations in the early period is significantly greater than the number of operations in the subsequent periods. This tendency suggests that the customers S belonging to the cluster A proactively try various operations of the register devices 20 and learn the operations quickly, thereby sufficiently utilizing the register devices 20. It is understood that the cluster A is distinguishable from other clusters in this respect.

### [Cluster B]

As can be seen from Fig. 6A, the customers S belonging to the cluster B tend to perform relatively a lot of operations in an extremely early period of starting the use of the register devices 20 and the number of operations of the customers S tends to decrease once and thereafter increase (rebound) gradually in a lot of types of operations (operations of almost all plots). This tendency suggests that the customers S belonging to the cluster B are gradually getting accustomed to the operations by trying various operations of the register devices 20 to some extent and thereafter utilize the register devices 20 to the same extent as the customers S belonging to the cluster A. In this respect, it is understood that the cluster B is distinguishable from other clusters.

### [Cluster C]

As can be seen from Fig. 6A, the customers S belonging to the cluster C tend to perform significantly less number of operations on the whole than the customers S belonging to the cluster A, though the changes over time in the number of operations of the customers S belonging to the cluster C are similar to those of the customers S belonging to the cluster A. This tendency suggests that the customers S belonging to the cluster C use the register devices 20 to some extent continuously and constantly, though the customers S do not frequently use the register devices 20. In this respect, it is understood that the cluster C is distinguishable from other clusters.

### [Cluster D]

As can be seen from Fig. 6B, the customers S belonging to the cluster D tend to perform the equivalent number of operations to that of the customers S belonging to the cluster C in the extremely early period, but thereafter the number of operations dramatically decreases and the customers S tend to not operate the register devices 20 almost at all in a relatively early stage. This tendency suggests that the customers S belonging to the cluster D try operations at the beginning of starting the use of the register devices 20, but have trouble learning well, for example, and that the customers S substantially stops using the register devices 20 in an early time period. In this respect, it is understood that the cluster D is distinguishable from other clusters.

### [Cluster E]

As can be seen from Fig. 6B, the customers S belonging to the cluster E tend to perform operations relatively frequently for a certain time period from the beginning, while the number of operations significantly decreases thereafter and the customers S tend to not operate the register devices 20 almost at all at the end of the prescribed time period. This tendency suggests that the customers S belonging to the cluster E actively perform various operations at the beginning of starting the use of the register devices 20 but substantially almost stop using the register devices 20 eventually. In this respect, it is understood that the cluster E is distinguishable from other clusters.

### [Cluster F]

As can be seen from Fig. 6B, the customers S belonging to the cluster F tend to perform some operations in an extremely early period while the number of operations itself thereof is extremely low and it also tends to not increase thereafter. This tendency suggests that the customers S belonging to the cluster F are likely to lack in intention to use the register devices 20 continuously or are likely to have no such intention in the first place, while performing some operations at the beginning of starting the use of the register devices 20. In this respect, it is understood that the cluster E is distinguishable from other clusters.

As described above, the server device 10 of a sales assistance system 100 described later is able to perform cluster analysis accurately by analyzing historic data of significant statistics related to the operation history of the register devices 20 by the customers S and previously typifying the plurality of clusters A to F.

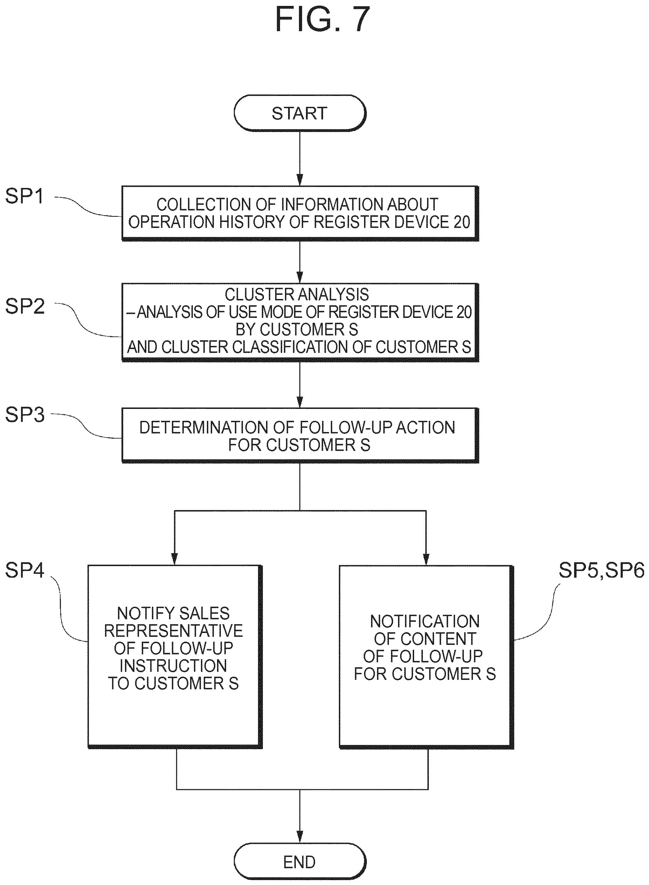

Subsequently, the flowchart of Fig. 7 illustrates an example of (a part of) processing flow in the sales assistance system 100.

### <Step SP1: Collection of information about operation history of register device 20 by customer S>

First, a person in charge of the register of the customer S activates the register device 20 (processing start) to start a program P20 (POS application software) in the processor 21 of the register device 20. The display device 26 of the register device 20 displays, for example, a login (sign in) screen to the POS system and the person in charge of the register inputs information necessary for the login.

In addition, before the login or after the completion of the login, the display device 26 displays a setting screen including icons, buttons, or the like for selection of various initial setting menus and/or setting menus other than the initial setting menu (for example, POS system setup, device settings, screen settings, account issue setting, security settings, product list management settings, accounting (cash register) settings, user management settings, sales management settings, reservation book settings, or the like). The setting screen may be appropriately hierarchized. The person in charge of the register of the customer S is allowed to select intended objects from the setting menus and to make various settings at any time, as needed. After the completion of the required settings or if the settings have already been completed, the person in charge of the register is allowed to switch the screen of the display device 26 to the accounting menu of the product or the like and to operate the input device 25 of the register device 20 to perform accounting processing for the product or the like.

At this time, the processor 21 of the register device 20 transmits information on the input operation history from the input device 25 operated by the person in charge of the register and information on the screen transition history in the display device 26 to the server device 10 by using the communication interface 24 in real time or at appropriate time intervals. Specifically, the processor 21 transmits information about the operation history of the input operation by the person in charge of the register in the first login screen to the POS system, various setting screens, accounting processing screen, or the like to the server device 10. The processor 11 of the server device 10 receives the information by using the communication interface 12, and thereby collects the information about the operation history of the register device 20 for a prescribed time period (for example, for several weeks to tens of weeks) starting from when the customer S starts using the register device 20 and stores the information into the memory resource 13 (step SP1). As described above, the processor 11 functions as "information collection unit."

### <Step SP2: Cluster analysis - Analysis of use mode of register device 20 by customer S and cluster classification of customer S>

The processor 11 of the server device 10 uses collected information about the operation history of the register device 20 to count the number of operations for each of the operation categories, for example, corresponding to plots PT1 to PT8 illustrated in Figs. 6A and 6B described above, per certain time period. The processor 11 further finds changes over time in the number of operations for a prescribed time period starting from when the customer S starts using the register device 20 (assumed to be plots ST1 to ST8) from the counting result and considers them to be the use modes of the register device 20 by the customers S. Thereafter, the processor 11 compares the respective plots ST1 to ST8 obtained with respect to the respective customers S with changes over time in the number of operations of previously-typified clusters A to F (in other words, the respective plots PT1 to PT8) and classifies the customers S into any one of the clusters A to F (corresponding to "particular cluster"). In this manner, the processor 11 functions also as "cluster analysis unit." A more specific example of the cluster analysis will be described below.

Specifically, first, function fitting is previously performed regarding the plots PT1 to PT8 (line graphs in which the plots PT1 to PT8 are connected to each other) of the clusters A to F illustrated in Figs. 6A and 6B. A function form in this case is not particularly limited. An arbitrary function form can be selected, for example, with the number of operations (vertical axis) and the number of weeks (horizontal axis) as variables. In this manner, the functions Fa(n) to Ff(n) (n = 1 to 8) respectively representing the plots PT1 to PT8 in the clusters A to F are obtained and then previously stored in the memory resource 13.

Subsequently, the processor 11 performs the same function fitting regarding the plots ST1 to ST8 of the customers S to obtain a plurality of functions Fs(n) (n = 1 to 8) representing the plots ST1 to ST8. The processor 11 then finds a correlation coefficient between each of the functions Fs(n) and each of the functions Fa(n) to Ff(n) previously stored in the memory resource 13 and calculates an integrated or average value of the correlation coefficients for each of the clusters A to F. For example, with respect to the cluster A, the processor 11 finds a correlation coefficient between each of the functions Fs(n) and each of the functions Fa(n) and calculates an integrated or average value of the found plurality of correlation coefficients. The same arithmetic processing is performed for other clusters B to F.

The processor 11 then selects a cluster having a high correlation coefficient with the functions Fs(n) as a whole, as a particular cluster into which the customer S should be classified. For example, the integrated or average value of the correlation coefficient between the functions Fs(n) and the functions Fa(n) is highest, the customer S is classified into the cluster A. Furthermore, with each of the functions Fa(n) to Ff(n) (n = 1 to 8) obtained as described above as a reference function, the processor 11 may fit the plots ST1 to ST8 of the customer S to the reference functions thereof and select the cluster having the highest integrated or average value of the correlation coefficients having been obtained as a particular cluster into which the customer S should be classified.

Alternatively, with the shapes of the plots PT1 to PT8 in the clusters A to F previously stored as images in the memory resource 13, the processor 11 may determine the similarity to the image of the obtained shape of the plot ST1 of the customer S and classify the customer S into the cluster having the highest similarity. For the similarity determination between the images, for example, the characteristics of the images (the outline, a binary pattern of image data, or the like) are extracted and a publicly-known appropriate algorithm (for example, the Average Hash method, pHash method, or the like) may be used.

### <Step SP3: Determination of follow-up action for customer S>

Subsequently, the processor 11 of the server device 10 determines a follow-up action for the customer S classified into a particular cluster. In this manner, the processor 11 also functions as "follow-up action determination unit." More specifically, the processor 11 sets the contents of the follow-up action for each of the clusters A to F as described below according to the characteristics of the clusters and stores the contents into the memory resource 13.

### [Cluster A]

In the light of the aforementioned tendency exhibited by the customer S belonging to the cluster A, it is assumed that the customer S belonging to the cluster A does not necessarily require hasty or frequent follow-up. Accordingly, the processor 11 makes settings of performing follow-up for the customer S belonging to the cluster A upon request from the customer S and/or performing follow-up by normal regular visits or contacts or the like, as the contents of the follow-up actions.

### [Cluster B]

In the light of the aforementioned tendency exhibited by the customer S belonging to the cluster B, it is assumed that the customer S belonging to the cluster B does not necessarily require hasty or frequent follow-up, similarly to the customer belonging to the cluster A. Accordingly, the processor 11 makes settings of performing follow-up also for the customer S belonging to the cluster B upon request from the customer S and/or performing follow-up by normal regular visits or contacts or the like, as the contents of the follow-up actions.

### [Cluster C]

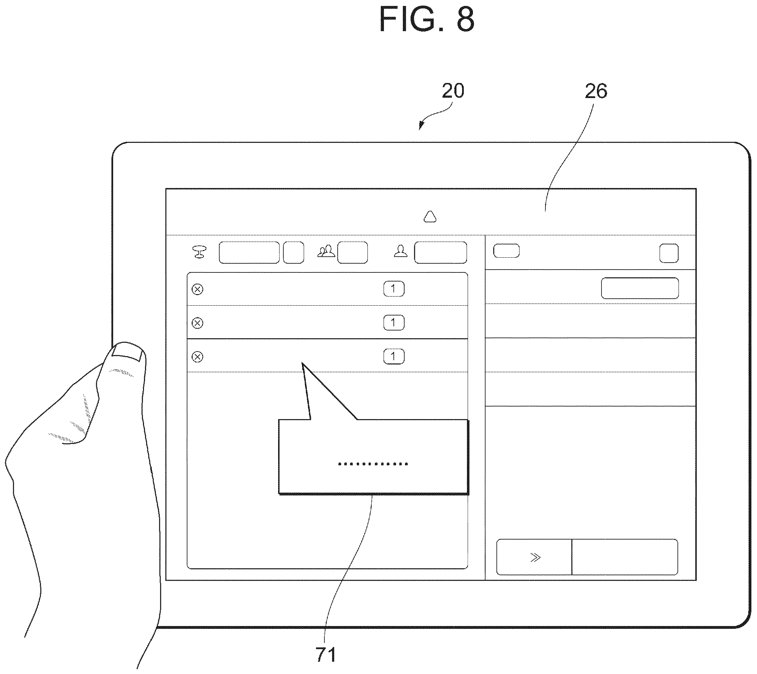

In the light of the aforementioned tendency exhibited by the customer S belonging to the cluster C, it is assumed that the customer S belonging to the cluster C does not require frequent follow-up so much, but adequately require more careful and generous follow-up than for the customer S belonging to the cluster A and for the customer S belonging to the cluster B. Therefore, the processor 11 makes settings of increasing the number of follow-up actions or frequency thereof or, as the case may be, changing user interfaces such as improving or simplifying operability of various screens displayed in the register device 20, as the contents of the follow-up actions. Incidentally, Fig. 8 is a plan view illustrating an example of a changed setting screen displayed on the display device 26 of the register device 20 used by the customer S belonging to the cluster C. In this screen, a pop-up window 71, which is not displayed on the normal screen, is displayed in order to prompt the customer S for input.

### [Cluster D]

In the light of the aforementioned tendency exhibited by the customers S belonging to the cluster D and a fact that the number of customers S belonging to the cluster D is extremely large in comparison with other clusters except the cluster F as illustrated in Fig. 5, it seems to be preferable to prevent the customers S belonging to the cluster D from leaving the service of using the register devices 20 from the viewpoint of increasing the sales effect and the sales efficiency.

For this purpose, it is thought that hasty or frequent follow-up needs to be performed at the time point when a prescribed time period has elapsed or from the time extremely earlier than the time point for the customers S belonging to the cluster D. Therefore, the processor 11 sets changing user interfaces, such as further increasing the number or frequency of follow-up actions for the customers S belonging to the cluster D more than for the customers S belonging to the cluster C or further improving the operability by further simplifying various screens displayed on the register devices 20 or by changing various screens to quite different screens, as the contents of the follow-up actions. In this respect, the "prescribed time period" for collecting information about the operation histories may be reduced to a time period shorter than in the example illustrated in Figs. 6A and 6B so as to find the presence of the customers S belonging to the cluster D earlier.

### [Cluster E]

In the light of the aforementioned tendency exhibited by the customer S belonging to the cluster E, it seems to be basically preferable to perform follow-up equivalent to that for the customer S belonging to the cluster D also for the customer S belonging to the cluster E. In this case, the processor 11 sets decreasing, for example, the frequency of follow-up for the customer S belonging to the cluster E in the early period of starting the use of the register device 20 to be relatively lower than the frequency of the follow-up for the customer S belonging to the cluster D, as the content of the follow-up action.

### [Cluster F]

In the light of the aforementioned tendency exhibited by the customer S belonging to the cluster F and the significantly larger number of customers S belonging to the cluster F than the number of customers S belonging to each of other clusters as illustrated in Fig. 4, it is likely that the same close follow-up as for the customers S belonging to the clusters D and E is effective also for the customers S belonging to the cluster F. As described above, however, the customers belonging to the cluster F are likely to lack in intention to use the register devices 20 continuously or likely to have no such intention in the first place. Therefore, in view of these circumstances, even if close follow-up is performed like for the customers S belonging to the clusters D and E, the customers belonging to the cluster F could be unlikely to use the service for using the register devices 20 continuously and proactively. Accordingly, for example, the processor 11 sets performing follow-up equivalent to the follow-up for the customers S belonging to the cluster C or not performing (stopping) continuous follow-up, for the customers S belonging to the cluster F, as the contents of the follow-up actions.

Thereafter, when the customer S is classified into a particular cluster, the processor 11 of the server device 10 determines the follow-up action stored in association with the cluster as a follow-up action for the customer S. Moreover, in addition to the content of the follow-up action, the processor 11 determines at least one of the following: (i) notifying the sales representative of a follow-up instruction for the customer S; (ii) notifying the customer S of the follow-up content directly or indirectly; and (iii) changing the screen display displayed on the register device 20 of the customer S. An example of the operations in these (i) to (iii) will be described below in further detail.

### <Step SP4: Notifying sales representative of follow-up instruction for customer S>

The processor 11 of the server device 10 notifies the sales representative of the instruction of the follow-up content based on the follow-up action determined for the customer S (step SP4: path K1 schematically illustrated in Fig. 1). In this case, as the sales representative to be notified of the follow-up instruction, it is possible to select a person mainly in charge of the customer S. Alternatively, if it is determined that hasty follow-up is necessary, it is also possible to select a person present relatively in the vicinity (in the neighborhood) of the customer S on the basis of the location information of the customer S (which can be acquired via the network N from the register 20) and location information of a plurality of sales representatives (which can be acquired via the network N from the user terminals 30 used by the sales representatives). As described above, it can be said that the processor 11 functions also as, as it were, "follow-up content notification unit."

Note here that the notification method of the follow-up instruction is not particularly limited, and the method includes push notification to the user terminal 30, a transmission of an e-mail or an electronic message, and the like. In addition, naturally the follow-up instruction may contain information on the customer S (location, contact information, map, route, etc.), data illustrated in Figs. 5A and 5B, and other appropriate additional information.

Moreover, in this case, application software (a sales assistance computer program) may be previously installed in the user terminal 30, as the program P30 stored in the memory resource 32 of the user terminal 30, wherein the application software receives the above push notification, e-mail, electronic message, or the like transmitted from the server device 10, displays the text data or image data of the content on the display device 36 using the processor 31, and/or reproduces audio data with the audio output device 33. In this manner, it can be said that the processor 31 functions as "follow-up instruction recognition unit" that makes the sale representative recognize the follow-up instruction notified of by the processor 11, which is "a follow-up content notification unit."

### <Steps SP5 and SP6: Notification of content of follow-up for customer S>

Alternatively, the processor 11 of the server device 10 may give notice of the content of the follow-up directly or indirectly to the customer S, instead of or in addition to notifying (the user terminal 30 of) the sales representative of the follow-up instruction for the customer S.

In this case, as an example of the direct notification, the content of the follow-up action for the customer S is transmitted by an e-mail, an electronic message, or the like (step SP5: path K2 schematically illustrated in Fig. 1). Furthermore, as an example of the indirect notification, the follow-up instruction for the customer S is transmitted temporarily to the call center 40 having phone operators and the like by push notification, an e-mail, an electronic message, or the like. Thereafter, the operator gives the content of the follow-up for the customer S by telephone or the like on the basis of the follow-up instruction to provide assistance (step SP6: path K3 schematically illustrated in Fig. 1).

According to the sales assistance computer program, the sales assistance application program, the sales assistance system 100, and the control method therefor configured as described above, the server device 10 performs cluster analysis based on the operation history of the register device 20 (customer device) by the customer S, thereby enabling a comparison between the use mode of each customer S with the characteristics of a plurality of previously-typified clusters A to F to classify the customer S into a particular cluster. Furthermore, the processor 11 determines the follow-up action set for the particular cluster (so-called a follow-up action specific to the cluster) as a follow-up action for the customer S, and therefore the sales representative is able to selectively perform the follow-up action based on the actual use mode of the register device 20 by the customer S. This enables appropriate and meticulous follow-up to be performed for each customer S and enables increasing the sales efficiency, customer satisfaction level, and sales effect and further enables not only the retention of existing customers (the prevention of customer churn) but also an increase in the opportunity of acquiring a new transaction advantageously.

Furthermore, the server device 10 calculates changes over time in the number of operations for a prescribed time period by the customer S and selects a particular cluster into which the customer S is classified on the basis of the changes over time (tendency) in the number of operations, and therefore the customer S can be accurately classified into a particular cluster by accurately understanding the use mode of the customer S, thereby enabling follow-up for the customer S to be performed more appropriately. Furthermore, the server device 10 calculates the changes over time in the number of operations for the prescribed time period for each type of operation in the register device 20, thereby enabling an increase in the accuracy in which the customer S is classified into the particular cluster.

Furthermore, the server device 10 notifies the user terminal 30 used by a sales representative mainly in charge of the customer S or a sales representative relatively in the vicinity of the customer S of a follow-up instruction for the customer S, and therefore the sales representative is able to provide an efficient and effective follow-up to the customer S. Furthermore, it is also possible to give the content of the follow-up to the customer S, instead of or in addition to notifying the sales representative of the follow-up instruction for the customer S, thereby enabling a wide variety of and more prompt assistance to be provided to the customer S.

Incidentally, as described above, the aforementioned embodiments are illustrative only for describing the present invention and do not intend to limit the scope of the present invention to the embodiments. Furthermore, the present invention may be modified in various forms without departing from the spirit and scope of the present invention. For example, a person skilled in the art is able to replace the resource (a hardware resource or a software resource) described in the embodiments with an equivalent, and such replacement is also included in the scope of the present invention.

Further, the cluster types are not limited to the aforementioned clusters A to F. For example, in the case where characteristic tendencies are found, the types and contents of the operation categories (for example, the aforementioned initialization, other various settings, reservation management, accounting management, sales management, customer management, login/logout, and the like) may be appropriately changed or may be further subdivided. Furthermore, the contents of the follow-up actions set for each cluster may be appropriately changed, for example, in view of the circumstances of the customer S, the type of customer device, an elapsed time period starting from the use of the customer device, and the like.

Still further, any one of steps SP4 to SP6 or a plurality thereof may be performed. Alternatively, steps SP4 to SP6 may be appropriately selected to be performed, for example, according to the use mode of the customer S. Furthermore, the computer for constituting the server device 10 is not limited to the host computer and may be composed of, for example, a general-purpose communication terminal device. Still further, the host computer constituting the server device 10 need not always be one computer, but may be composed of a plurality of sub-computers distributed on the network N.

Moreover, naturally a gateway server or the like may intervene between the server device 10 and the register device 20 and between the server device 10 and the user terminal 30, where the gateway server converts the communication protocol therebetween. Furthermore, all of the server device 10, the register device 20, and the user terminal 30 may be general-purpose communication terminal devices, such as, for example, a desktop personal computer, a notebook personal computer, a tablet personal computer, a laptop personal computer, a mobile phone including a smartphone, and the like. More specifically, the mobile phone includes a personal digital cellular (PDC), a personal communication system (PCS), a global system for mobile communications (GSM)®, a personal handy phone system (PHS), a personal digital assistant (PDA), and other handheld mobile terminals, for example. Furthermore, as a data communication system in these mobile phones, there are, for example, a wideband code division multiple access (W-CDMA), a code division multiple access-2000 (CDMA-2000), an international mobile telecommunication-2000 (IMT-2000), a wireless broadband Internet (Wibro), and other standards.

Furthermore, a sales assistance system according to the disclosure of the present invention may include: an information collection unit that collects information about an operation history of a customer device by a customer for a prescribed time period starting from when the customer starts using the customer device via a network; a cluster analysis unit that analyzes, on the basis of the operation history, the use mode of the customer device by the customer, and on the basis of the use mode, classifies the customer into a particular cluster from among a plurality of typified clusters; and a follow-up action determination unit that determines a follow-up action set for the particular cluster to be the follow-up action for the customer classified into the particular cluster, wherein the cluster analysis unit may calculate the changes over time in the number of operations for the prescribed time period by the customer from the operation history and may select the particular cluster into which the customer is classified on the basis of the changes over time in the number of operations.

Moreover, a control method for a sales assistance system according to the disclosure of the present invention may be a control method for a sales assistance system including an information collection unit, a cluster analysis unit, and a follow-up action determination unit, wherein: the information collection unit collects information about an operation history of a customer device by a customer for a prescribed time period starting from when the customer starts using the customer device via a network; the cluster analysis unit analyzes the use mode of the customer device by the customer on the basis of the operation history and classifies the customer into a particular cluster from among a plurality of typified clusters on the basis of the use mode; the follow-up action determination unit determines a follow-up action set for the particular cluster to be the follow-up action for the customer classified into the particular cluster; and further the cluster analysis unit calculates the changes over time in the number of operations for the prescribed time period by the customer from the operation history and selects the particular cluster into which the customer is classified on the basis of the changes over time in the number of operations.

Further, a customer sales assistance computer program according to the disclosure of the present invention may cause a computer to function as:
an information collection unit that collects information about an operation history of a customer device by a customer for a prescribed time period starting from when the customer starts using the customer device via a network; a cluster analysis unit that analyzes, on the basis of the operation history, the use mode of the customer device by the customer, and on the basis of the use mode, classifies the customer into a particular cluster from among a plurality of typified clusters; and a follow-up action determination unit that determines a follow-up action set for the particular cluster to be the follow-up action for the customer classified into the particular cluster, wherein the cluster analysis unit calculates the changes over time in the number of operations for the prescribed time period by the customer from the operation history and selects the particular cluster into which the customer is classified on the basis of the changes over time in the number of operations.

### Industrial Applicability

According to the disclosure of the present invention, an appropriate and meticulous follow-up can be provided for each customer, which thereby increases the sales efficiency, the customer satisfaction level, and the sales effect, and therefore the present invention is widely applicable to activities such as the design, manufacturing, offering, sales, or the like of a program, a system, and a method in the field of offering services requiring follow-up for customers.

### Reference Signs List

10: Server device
11: Processor (information collection unit, cluster analysis unit, follow-up action determination unit)
12: Communication interface
13: Memory resource
14: Control module
15: Image module
16: Communication module
20: Register device (customer device)
21: Processor
22: Memory resource
23: Audio output device
24: Communication interface
25: Input device
26: Display device
27: Camera
30: User terminal
31: Processor
32: Memory resource
33: Audio output device
34: Communication interface
35: Input device
36: Display device
37: Camera
40: Call center
71: Pop-up window
100: Sales assistance system
K1, K2, K3: Path
N: Network
P10, P20, P30: Program
PT1 to PT8: Plots corresponding to clusters A to F
S: Customer
SP1 to SP6: Steps

## Claims

1. A sales assistance system comprising:
an information collection unit that collects information about an operation history of a customer device by a customer for a prescribed time period starting from when the customer starts using the customer device via a network;
a cluster analysis unit that analyzes, on the basis of the operation history, the use mode of the customer device by the customer, and on the basis of the use mode, classifies the customer into a particular cluster from among a plurality of typified clusters; and
a follow-up action determination unit that determines a follow-up action set for the particular cluster to be the follow-up action for the customer classified into the particular cluster.

2. The sales assistance system according to claim 1 further comprising a memory resource that stores the plurality of clusters.

3. The sales assistance system according to claim 1, wherein the cluster analysis unit calculates the changes over time in the number of operations for the prescribed time period by the customer from the operation history and selects the particular cluster into which the customer is classified on the basis of the changes over time in the number of operations.

4. The sales assistance system according to claim 3, wherein the cluster analysis unit calculates the changes over time in the number of operations for the prescribed time period for each type of the operations in the customer device.

5. The sales assistance system according to claim 1, wherein the follow-up action determination unit determines at least one of notifying a sales representative of a follow-up instruction to the customer, notifying the customer of the follow-up content directly or indirectly, and changing a screen display displayed on the customer device of the customer, in addition to the content of the follow-up action.

6. The sales assistance system according to claim 1, wherein the follow-up action is at least one of the following actions (1) to (5):
(1) performing follow-up upon request from the customer;
(2) making a regular visit and/or contact at a first frequency;
(3) making a regular visit and/or contact at a second frequency different from the first frequency;
(4) changing a user interface in the customer device; and
(5) stopping the continued follow-up.

7. A control method for a sales assistance system including an information collection unit, a cluster analysis unit, and a follow-up action determination unit, wherein:
the information collection unit collects information about an operation history of a customer device by a customer for a prescribed time period starting from when the customer starts using the customer device via a network;
the cluster analysis unit analyzes the use mode of the customer device by the customer on the basis of the operation history and classifies the customer into a particular cluster from among a plurality of typified clusters on the basis of the use mode; and
the follow-up action determination unit determines a follow-up action set for the particular cluster to be the follow-up action for the customer classified into the particular cluster.

8. A customer sales assistance computer program causing a computer to function as:
an information collection unit that collects information about an operation history of a customer device by a customer for a prescribed time period starting from when the customer starts using the customer device via a network;
a cluster analysis unit that analyzes, on the basis of the operation history, the use mode of the customer device by the customer, and on the basis of the use mode, classifies the customer into a particular cluster from among a plurality of typified clusters; and
a follow-up action determination unit that determines a follow-up action set for the particular cluster to be the follow-up action for the customer classified into the particular cluster.
